# EUROPEAN PATENT APPLICATION

(11) **EP 4 730 493 A1**
(43) Date of publication of application: **22.04.2026**
(21) Application number: 24843288.2
(22) Date of filing: 28.05.2024
(51) Int. Cl.: H01M 50/102, H01M 50/105, H01M 50/124, H01M 50/342, B21C 23/21

(54) **BATTERY CELL COMPRISING CASE AND MANUFACTURING DEVICE OF CASE**

(30) Priority: 14.07.2023 KR 20230091945
(71) Applicant: SK On Co., Ltd., Seoul 03161 (KR)
(72) Inventor: SHIN, Jae-Sik, Daejeon 34124 (KR); KO, Bo-Kyung, Daejeon 34124 (KR); JU, Seung-Hoon, Daejeon 34124 (KR); PARK, Do-Il, Daejeon 34124 (KR)
(74) Representative: Prüfer & Partner mbB Patentanwälte · Rechtsanwälte
(86) International application number: PCT/KR2024/007202
(87) International publication number: WO 2025/018567

(57) **Abstract**

A battery cell is provided. The battery cell may include a case and an electrode assembly arranged in the case. The case may include a central portion having a first thickness, and an edge portion extending from the central portion and having a second thickness less than the first thickness.

## Description

### Technical Field

The present disclosure relates to a battery cell including a case and a device for manufacturing the case.

### Background Art

Unlike primary batteries, secondary batteries can be charged and discharged, and are applicable to devices within various fields such as digital cameras, mobile phones, laptops, hybrid vehicles, electric vehicles, or energy storage systems (ESS). The secondary batteries may be lithium-ion batteries, nickel-cadmium batteries, nickel-metal hydride batteries, or nickel-hydrogen batteries.

Secondary batteries are manufactured as flexible pouch-type battery cells or rigid square or cylindrical can-type battery cells. A plurality of battery cells may be formed into a cell assembly having a stacked shape. The cell assembly may be disposed in a module housing to form a battery module, and a plurality of battery modules may be disposed in a pack housing to form a battery pack.

### Disclosure of Invention

### Technical Problem

A prismatic battery cell may include a case that accommodates an electrode assembly (e.g., a jellyroll-type electrode assembly). However, when the case has a uniform thickness, the electrode assembly may be in close contact with the case. When the electrode assembly is in close contact with the case, release of gas generated from the electrode assembly to the outside may be impeded.

According to an aspect of the present disclosure, a battery cell including a case that provides a path for gas generated from an electrode assembly to be released to an outside of the battery cell, and a method for manufacturing the case, are provided.

A battery cell of the present disclosure can be widely applied to devices within green technology fields such as electric vehicles, battery charging stations, and other battery-powered solar and wind power generation devices. Furthermore, a battery cell of the present disclosure can be used in eco-friendly electric vehicles and hybrid vehicles that ameliorate the effects of climate change by suppressing air pollution and greenhouse gas emissions.

### Solution to Problem

A battery cell of the present disclosure includes a case; and an electrode assembly disposed in the case. The case includes a central portion having a first thickness, and an edge portion extending from the central portion and having a second thickness, less than the first thickness.

According to an embodiment, the case may include a first side region having a first width, and a second side region having a second width, greater than the first width. The central portion and the edge portion may form at least a portion of the second side region.

According to an embodiment, the central portion may be configured to apply pressure to the electrode assembly.

According to an embodiment, a first distance between the electrode assembly and the central portion may be less than a second distance between the electrode assembly and the edge portion.

According to an embodiment, the central portion and the edge portion may form an inner surface having a curve shape.

According to an embodiment, the battery cell may further include an insulator covering at least a portion of the electrode assembly. The edge portion may be spaced apart from the insulator.

According to an embodiment, the electrode assembly may include a first electrode assembly including a first surface, facing the case, and a second surface, opposite to the first surface, and a second electrode assembly including a third surface facing the second surface and a fourth surface opposite to the third surface and facing the case.

According to an embodiment, the central portion may include a first central portion providing pressure to the first surface of the first electrode assembly, and a second central portion providing pressure to the fourth surface of the second electrode assembly.

According to an embodiment, the case may include an opening extending from a first end portion of the case to a second end portion, opposite to the first end portion. The battery cell may further include a first cap assembly, covering the first end portion and a second cap assembly, covering the second end portion of the opening.

According to an embodiment, the case may be manufactured using an extrusion process.

A device for manufacturing a case of the present disclosure may include a first extrusion mold including a base including at least one through-hole accommodating a metal base material, and a core portion protruding from the base; and a second extrusion mold including a receiving portion accommodating the core portion. The core portion may include a first central core portion having a first length; and an end portion extending from the central core portion and having a second length, greater than the first length.

According to an embodiment, the first extrusion mold may include a rear surface configured to face a piston pressurizing the metal base material and a front surface opposite to the rear surface. The second extrusion mold may be disposed on the front surface of the first extrusion mold.

According to an embodiment, the at least one through-hole may be located to be adjacent to a corner of the core portion.

According to an embodiment, the second extrusion mold may include an inner surface defining the receiving portion. A distance between the central core portion and the inner surface may be greater than a distance between the end portion of the core portion and the inner surface.

### Advantageous Effects of Invention

According to an embodiment of the present disclosure, gas generated from an electrode assembly can be discharged to the outside of a battery cell. By discharging the gas generated from the electrode assembly, lifespan of the electrode assembly can be improved.

### Brief Description of Drawings

FIG. 1 is a perspective view of a battery cell according to an embodiment.
FIG. 2 is a cross-sectional view taken along line A-A' of FIG. 1.
FIG. 3 is a perspective view of a case according to an embodiment.
FIGS. 4a, 4b, and 4c are schematic diagrams of a device for manufacturing a case according to an embodiment.
FIG. 5 is a perspective view of a battery cell according to an embodiment.
FIG. 6a is a perspective view of an electrode assembly according to an embodiment. FIG. 6b is a drawing illustrating connection between an electrode assembly and a cap assembly according to an embodiment.
FIG. 7 is a cross-sectional view taken along line B-B' of FIG. 5.

### Best Mode for the Invention

Hereinafter, the present disclosure will be described in detail with reference to the attached drawings. However, these are merely illustrative and the present disclosure is not limited to the specific embodiments described as examples.

Terms and words used in this specification and claims described below are not to be construed as limited to their conventional or dictionary meanings. Based on the principle that the inventor can appropriately define the concepts of terms to best describe his or her invention, he or she will interpret them in a way that is consistent with the technical spirit of the present disclosure.

Therefore, the embodiments described in this specification and the configurations depicted in the drawings are merely the most preferred embodiments of the present disclosure and do not represent the entire technical spirit of the present disclosure. It should be understood that various equivalents and modifications may be substituted for them at the time of filing.

Detailed descriptions of known functions and configurations that may obscure the gist of the present disclosure are omitted. In the attached drawings, some components are exaggerated, omitted, or schematically illustrated, and the sizes of each component do not entirely reflect the actual size.

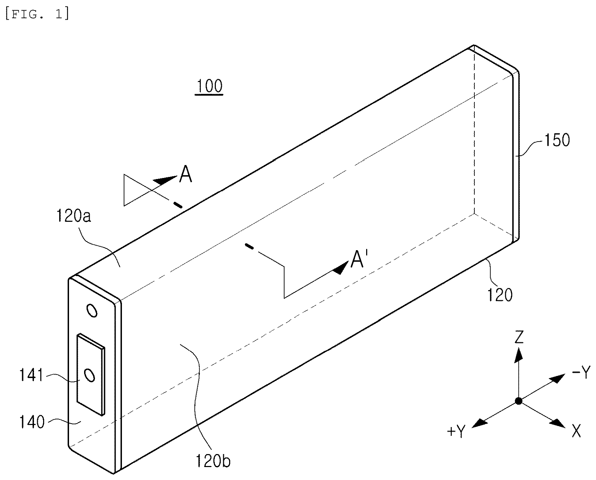

FIG. 1 is a perspective view of a battery cell according to an embodiment.

Referring to FIG. 1, a battery cell (100) may be a prismatic secondary battery cell. For example, the battery cell (100) may be a lithium-ion battery or a nickel metal hydride battery, capable of charging and discharging. The battery cell (100) may include a case (120) and/or a cap assembly (140, 150).

The battery cell (100) of FIG. 1 may be a secondary battery. For example, the battery cell (100) may be a lithium-ion battery, but is not limited thereto. For example, the battery cell (100) may be a nickel-cadmium battery, a nickel-metal hydride battery, or a nickel-hydrogen battery, capable of charging and discharging.

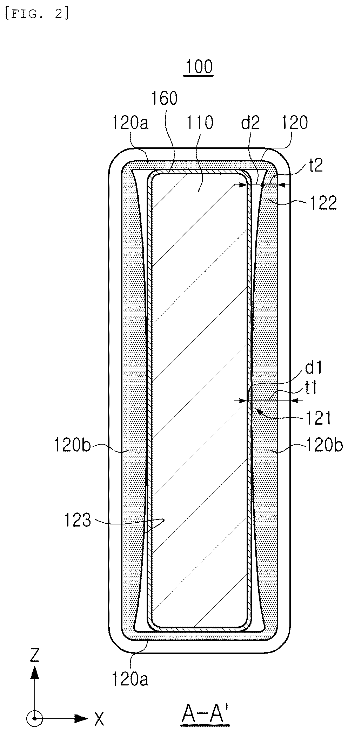

The case (120) forms at least a portion of an exterior of the battery cell (100) and can accommodate an electrode assembly (e.g., an electrode assembly (110) of FIG. 2). For example, the case (120) can provide a space in which the electrode assembly (110) and an electrolyte are accommodated. According to an embodiment, the case (120) can include aluminum. The case (120) can be referred to as a can or a housing. The case (120) can have a substantially rectangular parallelepiped shape with at least a portion being open. For example, the case (120) can include a first side region (120a) having a first width (w1) and a second side region (120b) having a second width (w2), greater than the first width (w1) of the first side region (120a). The first side region (120a) may be referred to as a narrow side surface, and the second side region (120b) may be referred to as a wide side surface.

According to an embodiment, the cap assemblies (140, 150) may be respectively coupled to both sides of the case (120) in a longitudinal direction (e.g., Y-axis direction). For example, the cap assemblies (140, 150) may accommodate the electrode assembly (110) and the electrolyte together with the case (120). The cap assemblies (140, 150) may include a first cap assembly (140) coupled to an end of the case (120) in a first direction (+Y direction) and a second cap assembly (150) coupled to an end portion of the case (120) in a second direction (-Y direction) opposite to the first direction (+Y direction). The first cap assembly (140) may cover a first end portion (128a) of the case (120). The second cap assembly (150) may cover a second end portion (128b) of the case (120).

The cap assemblies (140, 150) may include a plurality of components. For example, the cap assembly (140) may include a cap plate coupled to the case (120) to seal the case (120), and a terminal plate (141) electrically connected to the electrode assembly (110).

The terminal plate (141) may have a positive or negative polarity. For example, based on the drawing, the first terminal plate (141) located in the first direction (+Y direction) of the case (120) may have a negative polarity, and the second terminal plate (not illustrated) located in the second direction (-Y direction) of the case (120) may have a positive polarity.

The components of the cap assembly (140, 150) described above are merely exemplary. Therefore, some of the components of the cap assembly (140, 150) may be omitted, or other components not described may be added. For example, the cap assembly (140, 150) may include a current collector, an insulating plate, a rivet terminal, and/or a gasket.

According to an embodiment, the battery cell (100) may include a venting portion (not illustrated) that provides a path for releasing gas generated in the electrode assembly (110) to the outside of the case (120). The venting portion may include a notch configured to rupture when a specified pressure is exceeded. The venting portion may be formed in the cap assembly (140, 150) or the case (120).

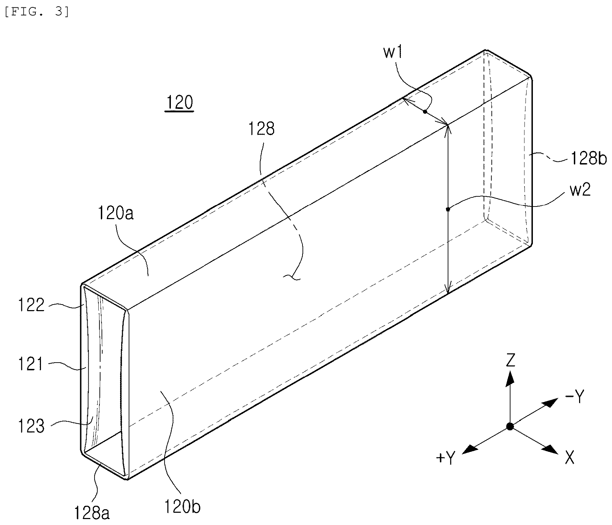

FIG. 2 is a cross-sectional view taken along line A-A' of FIG. 1. FIG. 3 is a perspective view of a case according to an embodiment.

Referring to FIGS. 2 and 3, a battery cell (100) may include an electrode assembly (110), a case (120), and/or an insulator (160). The descriptions of the battery cell (100) and case (120) of FIG. 1 may apply to the battery cell (100) and case (120) of FIGS. 2 and/or 3.

The electrode assembly (110) may include a positive electrode plate, a negative electrode plate, and at least one separator to prevent contact between the positive and negative electrode plates.

According to an embodiment, the electrode assembly (110) may be a jelly roll-type electrode assembly in which the positive electrode plate, the negative electrode plate, and the at least one separator are wound together.

However, a structure of the electrode assembly (110) may be designed selectively. For example, the electrode assembly (110) may be a Z-folding type electrode assembly including a plurality of folded separators, or a stacked electrode assembly in which one positive electrode plate among the plurality of positive electrode plates, one separator among the plurality of separators, one negative electrode plate among the plurality of separators, and another separator among the plurality of separators are alternately stacked.

According to an embodiment, the case (120) may include an opening (128) extending from one side (+Y direction) to the other side (-Y direction) of the battery cell (100) in the longitudinal direction (Y-axis direction). The opening (128) may extend from a first end portion (128a) located at one side of the battery cell (100) to a second end portion (128b) located at the other side of the battery cell (100). The opening (128) may be an empty space connected to an internal space. For example, the case (120) may be a hollow body. A cross-section of the case (120) may be formed in a closed curve shape.

The case (120) may be formed to have different thicknesses in different portions. According to an embodiment, the second side region (120b) of the case (120) may have different thicknesses in different portions. For example, a thickness of a central portion (121) of the second side region (120b) may be less than a thickness of an edge portion (122).

According to an embodiment, the case (120) may include a central portion (121) having a first thickness (t1) and an edge portion (122) having a second thickness (t2), less than the first thickness (t1). The edge portion (122) may extend from the central portion (121). For example, the edge portion (122) may be a portion of the case (120) extending from an edge of the central portion (121).

According to an embodiment, the central portion (121) may provide pressure to the electrode assembly (110). For example, the central portion (121) may contact the electrode assembly (110) or the insulator (160). The edge portion (122) may be spaced apart from the electrode assembly (110) or the insulator (160). According to an embodiment, a first distance (d1) between the central portion (121) and the electrode assembly (110) may be less than a second distance (d2) between the edge portion (122) and the electrode assembly (110). According to an embodiment, the sum of the first distance (d1) and the first thickness (t1) may be substantially equal to the second distance (d2) and the second thickness (t2).

By pressurizing the electrode assembly (110) by the central portion (121) of the case (120), lifespan of the electrode assembly (110) may be improved. For example, when gas is generated in the electrode assembly (110), the gas may pass through an empty space between the edge portion (122) of the case (120) and the electrode assembly (110) and a venting portion (not illustrated) to the outside of the case (120).

According to an embodiment, a thickness of the case (120) may be gradually or continuously changed. For example, the central portion (121) and the edge portion (122) of the case (120) may form an inner surface (123) having a curved shape.

The case (120) may be manufactured using an extrusion process. The case (120) may be formed in a shape extending in the longitudinal direction (e.g., the Y-axis direction). For example, the central portion (121) of the case (120) may protrude toward the electrode assembly (110) and extend in the longitudinal direction (the Y-axis direction).

The insulator (160) may be used to insulate the case (120) of the battery cell (100). For example, the insulator (160) may be referred to as a protective member, a protective tape, an insulating film, an insulating member, and/or an insulating tape. According to an embodiment, the insulator (160) may include an adhesive material for bonding with the case (120).

The insulator (160) may cover at least a portion of the electrode assembly (110). For example, the insulator (160) may be located between the electrode assembly (110) and the case (120). While the insulator (160) is illustrated as covering entirely the case (120), a position where the insulator (160) covers the electrode assembly (110) may be changed depending on a design.

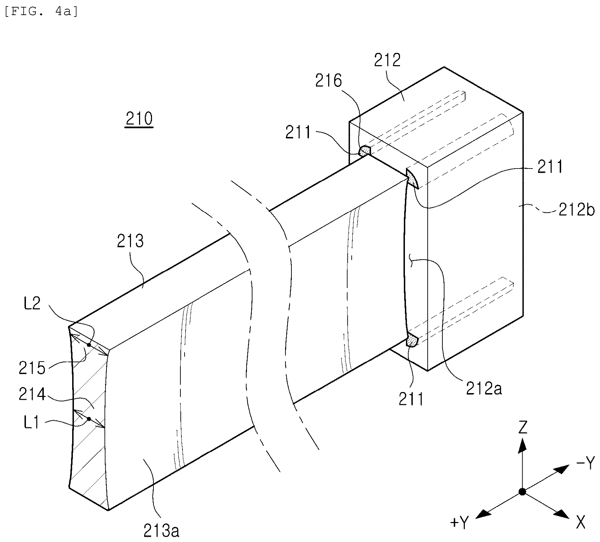

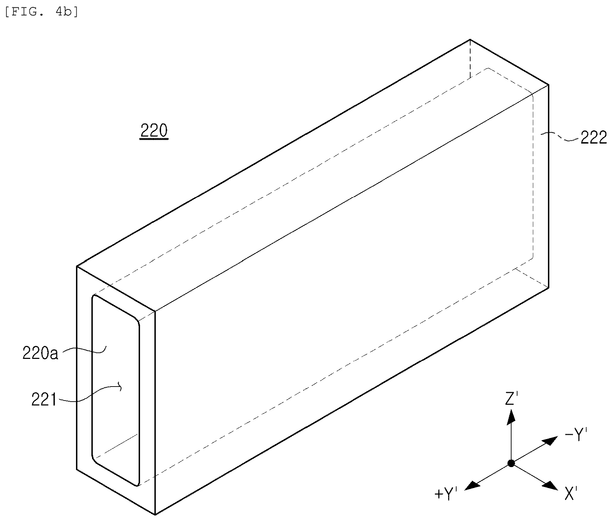

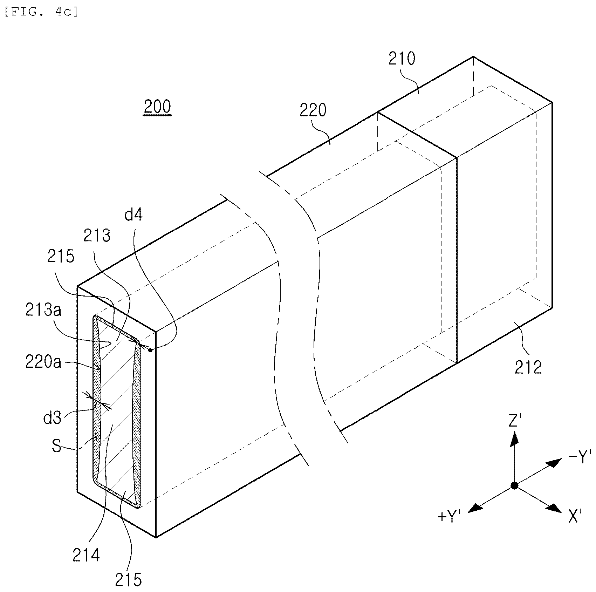

FIGS. 4a, 4b, and 4c are schematic diagrams of a device for manufacturing a case according to an embodiment. For example, FIG. 4a is a schematic diagram of a first extrusion mold (210). FIG. 4b is a schematic diagram of a second extrusion mold (220). FIG. 4c is a schematic diagram of a device (200) for manufacturing a case in which a first extrusion mold (210) and a second extrusion mold (220) are combined.

Referring to FIGS. 4a, 4b, and/or 4c, a device (200) for manufacturing a case may include a first extrusion mold (210) and a second extrusion mold (220). The device (200) may be used to manufacture the case (120) of FIGS. 1 to 3. The device (200) may be referred to as a device for manufacturing a battery cell case.

According to an embodiment, a case (120) may be manufactured using an extrusion process. For example, a case (120) may be manufactured using the first extrusion mold (210) and the second extrusion mold (220).

The first extrusion mold (210) may include a base (212) having at least one through-hole (211) formed therein.

According to an embodiment, the base (212) may include a front surface (212a) facing a third direction (+X' direction) and a back surface (212b) facing a fourth direction (-X' direction) opposite to the third direction.

The through-hole (211) may be a hollow space formed by penetrating from the front surface (210a) of the base (212) to the back surface (210b). According to an embodiment, the through-hole (211) may be referred to as a first through-hole.

The through-hole (211) may accommodate a metal base material (not illustrated). For example, the metal base material may be inserted into the through-hole (211) of the first extrusion mold (210). The metal base material located in the through-hole (211) may be pressurized using a pressurizing device (e.g., a piston), not illustrated. The metal base material, pressurized by the pressurizing device, may pass through the through-hole (211) and be transferred to the second extrusion mold (220). The metal base material may be a molten metal. According to an embodiment, a plurality of through-holes (211) may be formed. For example, the through-holes (211) may be formed to correspond to at least a portion of a corner portion of the receiving portion (221).

According to an embodiment, the first extrusion mold (210) may include a core portion (213) protruding from the base (212). The core portion (213) may protrude from the front surface (212a) of the base (212) in the third direction (+X' direction).

According to an embodiment, a shape of the core portion (213) may be designed to correspond to the internal space of a case (e.g., case (120) of FIG. 2). For example, the case (120) may be manufactured by solidifying a metal base material located between the surface of the core portion (213) and an inner surface (220a) of the receiving portion (221). According to an embodiment, the through-hole (211) may be located to be adjacent to a corner (216) of the core portion (213).

A distance (e.g., third distance (d3)) between the central core portion (214) and the inner surface (220a) of the second extrusion mold (220) may be greater than a distance (e.g., fourth distance (d4)) between the end portion (215) of the core portion (213) and the inner surface (220a). According to an embodiment, the third distance (d3) may be substantially equal to a first thickness (t1) of the central portion (e.g., the central portion (121) of FIG. 2), and the fourth distance (d4) may be substantially equal to a second thickness (t2) of the edge portion (e.g., the edge portion (122) of FIG. 2).

According to an embodiment, the core portion (213) may be formed to become thicker from a center toward the end portion. According to an embodiment, the core portion (213) may include the central core portion (214) having a first length (L1) and the end portion (215) having a second length (L2), greater than the first length (L1). For example, an outer side surface (213a) of the core portion (213) may be formed as an arch-shaped curved surface.

The second extrusion mold (220) may include a receiving portion (221). The receiving portion (221) may receive the core portion (213). The second extrusion mold (220) may include the inner surface (220a) defining the receiving portion (221). The inner surface (220a) of the second extrusion mold (220) may be spaced apart from the outer side surface (213a) of the core portion (223). A case (e.g., case (120) of FIG. 2) may be formed by a hollow space (S) at least partially surrounded by the inner surface (220a) of the second extrusion mold (220) and the outer side surface (213a) of the core portion (223). According to an embodiment, the receiving portion (221) may be formed in a substantially rectangular parallelepiped shape. According to an embodiment, the receiving portion (221) may be referred to as a second through-hole. The hollow space (S) may be a space for receiving a metal base material.

According to an embodiment, the first extrusion mold (210) may be detachably coupled to the second extrusion mold (220). For example, the second extrusion mold (220) may be disposed on the front surface (212a) of the base (212). A rear surface (222) of the second extrusion mold (220) may face the front surface (212a) of the base (212). For example, the second extrusion mold (220) may be coupled to the first extrusion mold (210) as the core portion (213) is inserted into the receiving portion (221) of the second extrusion mold (220). In another embodiment, the first extrusion mold (210) may be formed integrally with the second extrusion mold (220).

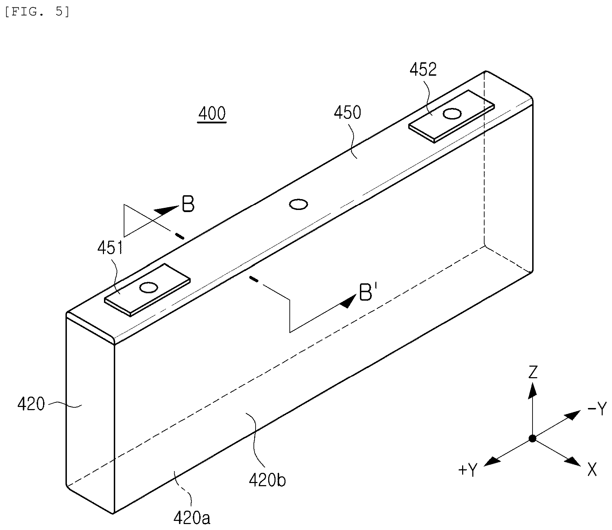

FIG. 5 is a perspective view of a battery cell according to an embodiment.

Referring to FIG. 5, a battery cell (400) may include an electrode assembly (not illustrated), a case (420), and a cap assembly (450). A configuration of the battery cell (100), the case (120), and the cap assembly (140, 150) of FIGS. 1, 2, and/or 3 may be all or part of the same as a configuration of the battery cell (400), the case (420), and the cap assembly

(450) of FIG. 5. For example, at least some of the descriptions of the battery cell (100), the case (120), and the cap assembly (140, 150) of FIGS. 1, 2, and/or 3 may be applied to the battery cell (400), the case (420), and the cap assembly (450) of FIG. 5.

According to an embodiment, the battery cell (400) may include one cap assembly (450). For example, the cap assembly (450) may include a first terminal plate (451) and a second terminal plate (452) having a different polarity from the first terminal plate (451). According to an embodiment, the cap assembly (450) may be referred to as an upper cap assembly.

A shape of the case (420) may be optionally designed. For example, when a thickness of the second side region (420b) of the case (120) is partially different, a device for manufacturing the case (120) may be optionally designed.

According to an embodiment, the case (420) may be manufactured by connecting (e.g., welding) a plurality of components. According to an embodiment, the case (420) may include a first side region (420a) and a second side region (420b) having a width, greater than that of the first side region (420a). The first side region (420a) may be coupled to the second side region (420b) by welding. For example, the case (420) of FIG. 5 may be manufactured by coupling the first side region (420a) to a case manufactured using the device (200) for manufacturing the case of FIGS. 4a, 4b, and/or 4c (e.g., case 120 of FIG. 1).

According to an embodiment, the case (120) may be formed integrally. For example, a device for manufacturing a case (e.g., device (200) of FIG. 4c) may include a non-illustrated mold located in front of the second extrusion mold (220). As another example, the second extrusion mold (220) of FIG. 4b may include a groove for accommodating the core portion (213) of FIG. 4a. According to an embodiment, the second extrusion mold (220) is referred to as a deep drawing mold, and the receiving portion (221) may be formed in a groove shape.

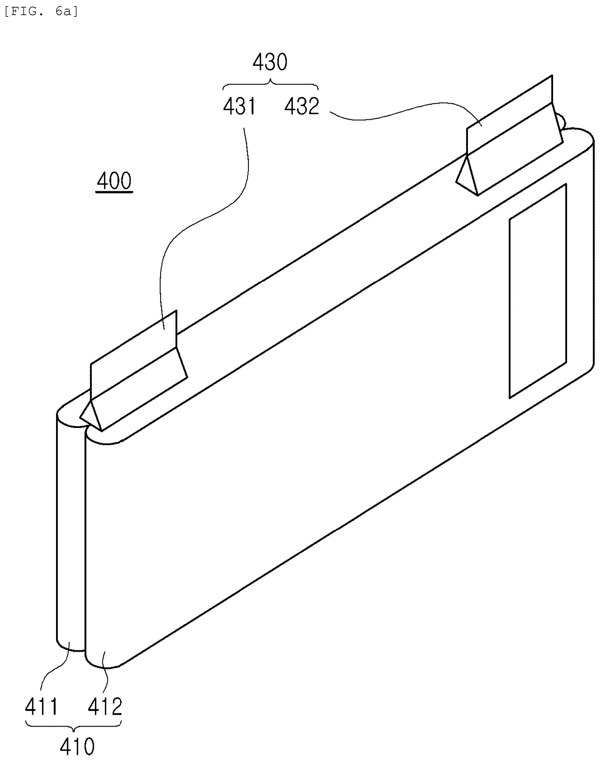

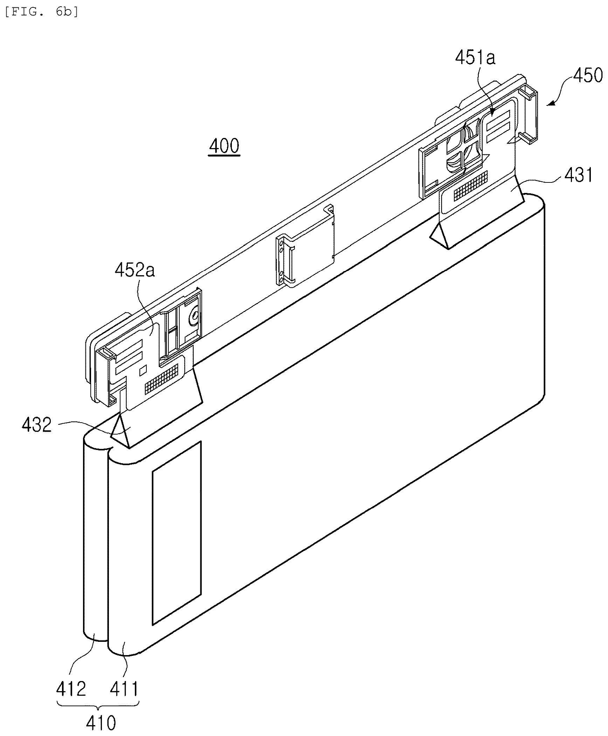

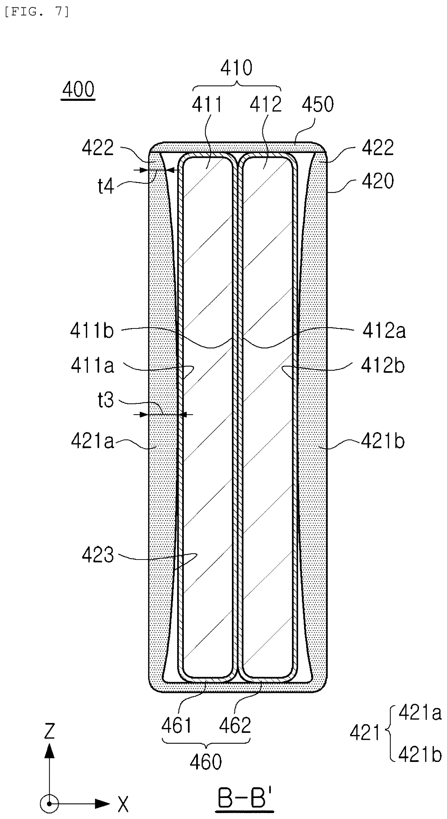

FIG. 6a is a perspective view of an electrode assembly according to an embodiment. FIG. 6b is a drawing illustrating connection between an electrode assembly and a cap assembly according to an embodiment. FIG. 7 is a cross-sectional view taken along line B-B' of FIG. 5.

Referring to FIG. 6a, FIG. 6b and/or FIG. 7, a battery cell (400) may include an electrode assembly (410), a case (420), a cap assembly (450), and an insulator (460).

The configuration of the battery cell (100, 400), the electrode assembly (110), the case (120, 420), the cap assembly (140, 150, 450) and the insulator (160) of FIG. 1, FIG. 2, FIG. 3 and/or FIG. 5 may be all or part of the same as the configuration of the battery cell (400), the case (420), the cap assembly (450) and the insulator (460) of FIG. 6a, FIG. 6b and/or FIG. 7. For example, at least a portion of the description of the battery cell (100, 400), the electrode assembly (110), the case (120, 420), the cap assembly (140, 150, 450), and the insulator (160) of FIGS. 1, 2, and 3 may be applied to the battery cell (400), the electrode assembly (410), the case (420), the cap assembly (450), and the insulator (460) of FIG. 6a, FIG. 6b, and/or FIG. 7.

According to an embodiment, the electrode assembly (410) may be provided in plurality of pieces. For example, the electrode assembly (410) may include a first electrode assembly (411) and a second electrode assembly (412). According to an embodiment, two electrode assemblies (411, 412) may be disposed in one case (420). The first electrode assembly (411) and the second electrode assembly (412) may be disposed in the case (420).

According to an embodiment, the insulator (460) may include a first insulator (461) surrounding at least a portion of the first electrode assembly (411) and a second insulator (462) surrounding at least a portion of the second electrode assembly (412). In an embodiment (not illustrated), one insulator (460) may cover at least a portion of the first insulator (461) and at least a portion of the second insulator (462). In an embodiment (not illustrated), the insulator (460) may be attached to a surface of the electrode assembly (410), except for a portion of the electrode assembly (410) where a foil (430) is located. According to an embodiment (not illustrated), the insulator (460) may be attached to five surfaces of the electrode assembly (410) excluding one surface facing the cap assembly (450).

According to an embodiment, the battery cell (100) may include a foil (430) electrically connecting the electrode assembly (410) and terminal plates (451, 452). For example, the foil (430) may include a first foil (431) connecting a positive electrode plate (not illustrated) of the electrode assembly (410) to a first terminal plate (451), and a second foil (432) connecting a negative electrode plate (not illustrated) of the electrode assembly (410) to a second terminal plate (452). For example, the first foil (431) may be connected to a conductive rear portion (451a) of the first terminal plate (451), and the second foil (432) may be connected to a conductive rear portion (452a) of the second terminal plate (452).

According to an embodiment, the case (420) may include a central portion (421) having a third thickness (t3) and an edge portion (422) having a fourth thickness (t4), less than the third thickness (t3). The edge portion (422) may extend from the central portion (421). For example, the edge portion (422) may be a portion of the case (420) extending from an edge of the central portion (421). The central portion (421) and the edge portion (422) may be formed to have a curved inner surface (423).

According to an embodiment, the edge portion (422) may be connected to the cap assembly (450). According to an embodiment, the description of the first thickness (t1) of the central portion (121) and the second thickness (t2) of the edge portion (122) of FIG. 2 may be applied to the third thickness (t3) of the central portion (421) and the fourth thickness (t4) of the edge portion (422) of FIG. 7.

According to an embodiment, the case (420) may provide pressure to the electrode assembly (410). For example, the case (420) may provide pressure so that the first electrode assembly (411) and the second electrode assembly (412) are in close contact with each other. The first electrode assembly (411) may include a first surface (411a) facing the case (420) and a second surface (411b) opposite to the first surface (411a). The second electrode assembly (412) may include a third surface (412a) facing the second surface (411b) and a fourth surface (412b) opposite to the third surface (412a) and facing the case (420).

The central portion (421) may include a first central portion (421a) capable of applying pressure to the first surface (411a) of the first electrode assembly (411) and a second central portion (421b) capable of applying pressure to the fourth surface (412b) of the second electrode assembly (412). For example, the first central portion (421a) may contact the first insulator (461) and/or the first electrode assembly (411). The second central portion (421b) may contact the second insulator (462) and/or the second electrode assembly (412). Stability of the electrode assembly (410) can be increased by receiving pressure from the first central portion (421a) and the second central portion (421b).

The description is merely an example of applying the principles of the present disclosure, and other configurations may be included without departing from the scope of the present disclosure.

While the embodiments of the present disclosure have been described above, the scope of the present disclosure is not limited thereto. It will be apparent to those skilled in the art that various modifications and variations are possible without departing from the technical spirit of the present disclosure as defined in the claims. For example, the present disclosure can be implemented by deleting some components from the aforementioned embodiments, and the embodiments can also be implemented in combination with each other.

## Claims

1. A battery cell comprising:
a case; and
an electrode assembly disposed in the case,
wherein the case includes:
a central portion having a first thickness, and
an edge portion extending from the central portion and having a second thickness, less than the first thickness.

2. The battery cell of claim 1, wherein the case includes a first side region having a first width, and a second side region having a second width, greater than the first width, and
the central portion and the edge portion form at least a portion of the second side region.

3. The battery cell of claim 1, wherein the central portion is configured to apply pressure to the electrode assembly.

4. The battery cell of claim 1, wherein a first distance between the electrode assembly and the central portion is less than a second distance between the electrode assembly and the edge portion.

5. The battery cell of claim 1, wherein the central portion and the edge portion form an inner surface having a curve shape.

6. The battery cell of claim 1, further including an insulator covering at least a portion of the electrode assembly,
wherein the edge portion is spaced apart from the insulator.

7. The battery cell of claim 1, wherein the electrode assembly includes a first electrode assembly including a first surface, facing the case, and a second surface, opposite to the first surface, and a second electrode assembly including a third surface facing the second surface and a fourth surface opposite to the third surface and facing the case.

8. The battery cell of claim 7, wherein the central portion includes a first central portion providing pressure to the first surface of the first electrode assembly, and a second central portion providing pressure to the fourth surface of the second electrode assembly.

9. The battery cell of claim 1, wherein the case includes an opening extending from a first end portion of the case to a second end portion, opposite to the first end portion, and
the battery cell further includes a first cap assembly, covering the first end portion and a second cap assembly, covering the second end portion of the opening.

10. The battery cell of claim 1, wherein the case is manufactured using an extrusion process.

11. A device for manufacturing a case, comprising:
a first extrusion mold including a base including at least one through-hole accommodating a metal base material, and a core portion protruding from the base; and
a second extrusion mold including a receiving portion accommodating the core portion,
wherein the core portion includes:
a first central core portion having a first length; and
an end portion extending from the central core portion and having a second length, greater than the first length.

12. The device of claim 11, wherein the first extrusion mold includes a rear surface configured to face a piston pressurizing the metal base material and a front surface opposite to the rear surface, and
the second extrusion mold is disposed on the front surface of the first extrusion mold.

13. The device of claim 11, wherein the at least one through-hole is located to be adjacent to a corner of the core portion.

14. The device of claim 11, wherein the second extrusion mold includes an inner surface defining the receiving portion, and
a distance between the central core portion and the inner surface is greater than a distance between the end portion of the core portion and the inner surface.
